# EUROPEAN PATENT APPLICATION

(11) **EP 4 721 885 A1**
(43) Date of publication of application: **08.04.2026**
(21) Application number: 25175121.0
(22) Date of filing: 08.05.2025
(51) Int. Cl.: B08B 1/20, H01M 10/04, B08B 1/34, B08B 1/40

(54) **CLEANING APPARATUS AND FOR A ROLLER FOR MANUFACTURING A SECONDARY BATTERY AND SECONDARY BATTERY MANUFACURING APPARATUS**

(30) Priority: 02.10.2024 KR 20240134373
(71) Applicant: SAMSUNG SDI CO., LTD., Yongin-si, Gyeonggi-do 17084 (KR)
(72) Inventor: CHOI, Wondo, 17084 Yongin-si (KR)
(74) Representative: Marks & Clerk LLP

(57) **Abstract**

Roller cleaning device (40) comprising a cleaning part (41) configured to be provided in an apparatus (20) for manufacturing a secondary battery that includes one or more rollers (30) configured to contact a substrate (24) coated with slurry (24a) for a secondary battery and a support structure (50) supporting the rollers (30), the cleaning part (41) being operatively associated with one of the rollers (30) and configured to remove contaminants (z) from a surface of the roller (30) by contacting the roller; a driving part configured to drive the cleaning part; and a controller (53) configured to control the driving part. Apparatus (20) for manufacturing a secondary battery comprising the roller cleaning device (40) and associated cleaning method.

## Description

### BACKGROUND

### 1. Field of the Disclosure

The present disclosure relates to the manufacturing of a secondary battery. More particularly, the present disclosure relates to an apparatus and method for manufacturing a secondary battery, and a roller cleaning device for use in an apparatus for manufacturing a secondary battery.

### 2. Discussion of Related Art

Unlike a primary battery that cannot be charged, a secondary battery can be charged or discharged. In general, a secondary battery includes an electrode assembly including a positive electrode plate, a negative electrode plate, and a separator. An exterior material (a case or a can) accommodates the electrode assembly. The electrode assembly may be classified as a winding type or a stacking type according to a stacking of the electrode plate and the separator. A winding type of electrode assembly is called a jelly roll and the stacking type of electrode assembly is called a stack.

The positive electrode plate and the negative electrode plate constituting the electrode assembly may be manufactured through a process of coating a slurry on a substrate, with slurry containing an electrode material active material, a process of rolling the electrode plate coated with the slurry, and a slitting process of cutting the rolled electrode plate in a longitudinal direction (i.e., an electrode plate transfer direction).

In an apparatus for manufacturing a secondary battery according to related art, stripes are left on the electrode plate in the process of coating the substrate with the slurry. The stripes are formed on the electrode plate because the slurry is transferred using a coating roller. But when the slurry is not completely dried or an adhesive force of the slurry to the substrate is insufficient, the stripes may be formed as the slurry is transferred and adhered to the electrode plate.

In order to solve this problem, the roller used to transfer the slurry should be stopped and wiped. However, in reality, the roller is often stopped when an operator wipes the equipment to remove the slurry. When the operator is by the operating equipment, there is the potential for a serious accident.

The information disclosed in this section is for enhancement of understanding of the background of the present disclosure and may contain information that does not constitute a related (or prior) art.

### SUMMARY OF THE DISCLOSURE

The present disclosure is directed to providing an apparatus and method for manufacturing a secondary battery and a roller cleaning device in an apparatus for manufacturing a secondary battery, in which a coating roller is frequently cleaned while equipment is driven. Thus, productivity and quality of a product are greatly improved and accidents may be prevented.

According to an aspect of the present disclosure, there is provided an apparatus for manufacturing a secondary battery, the apparatus including a roller configured to contact a substrate coated with a slurry for the secondary battery, a support structure rotatably supporting a roll, a cleaning part that is provided with the support structure and adjustable between a position spaced from the roller and a position in which the cleaning part is in contact with the roller, the cleaning part being configured to remove contaminants from the roller when the cleaning part is in contact with the roller, a driving part that drives the cleaning part, and a controller that controls the driving part.

The support structure may include a base configured to provide support and side columns fixed to the base, with the columns facing each other and supporting opposite ends of the roller, and wherein the cleaning part may include a cleaning roller that is supported by the side columns to be rotatable and vertically movable.

The driving part may include: a lifting carrier vertically movable in one of the side columns; an actuator configured to adjust a height of the lifting carrier; and an output motor provided with the lifting carrier and configured to transmit a rotational force to the cleaning roller.

The cleaning roller may include a hollow roller body and a cleaning cloth on an outer surface of the roller body, and the driving part may include: a tube fixed to an end of the roller body and extending to one of the side columns; a lifting carrier that rotatably supports the tube and is vertically movable inside the one of the side columns; an output motor connected to the lifting carrier and configured to provide a rotational force for rotating the tube; and an actuator configured to adjust a height of the lifting carrier.

A plurality of through-holes may be formed in a periphery of the roller body, and a cleaning liquid supply part may be connected to an end of the tube and may be configured to supply a cleaning liquid to the tube.

The apparatus may further comprise a sensor configured to detect contact between the cleaning roller and the roller and transmit a signal indicating the contact to the controller.

The support structure may include a base supporting side columns with the side columns facing each other, and with the side columns rotatably supporting opposite ends of the roller, and the driving part may include a three-dimensional motion output part provided on the base, the three-dimensional motion output part being configured such that its location is adjustable, and the three-dimensional motion part being configured to move the cleaning part in a front-rear direction, a left-right direction, and an up-down direction.

The three-dimensional motion output part may include: a support bed provided on the base; an X driving part configured to move the support bed in a width direction of the substrate; a slider provided on the support bed and configured to be slidable in a Y-axis direction perpendicular to the X-axis direction; a Y driving part configured to move the slider in the Y-axis direction; and a Z driving part provided on the slider and configured to vertically move the cleaning part in a vertical direction.

The Z driving part may be an actuator that is vertically mounted, wherein a support frame may be fixed to an upper end of a piston rod of the actuator, and wherein the cleaning part may include a cleaning roller rotatably supported by the support frame and positioned parallel to the roller.

The apparatus may further comprise a rotation part mounted on the support frame and configured to rotate the support frame about an axis in the Z direction.

The apparatus may further comprise a sensor configured to close contact between the cleaning roller and the roller and transmit a signal indicating the contact to the controller.

According to another aspect of the present disclosure, there is provided a method of cleaning in an apparatus for manufacturing a secondary battery, the method including a cleaning roller movement operation of using a driving part of the apparatus to move a cleaning roller toward a roller, with the apparatus including a support structure supporting the roller in contact with a substrate coated with slurry for a secondary battery, and with the cleaning roller provided with the support structure and being configured to contact roller to remove contaminants from the roller, and with the driving part operating the cleaning roller, and a cleaning roll rotation operation of rotating the cleaning roller in contact with the roller to remove contaminants from a surface of the roller.

The apparatus may further include a sensor configured to detect contact between the cleaning roller and the roller, and the method may further comprise a sensing operation of using the sensor to identify a contact state of the cleaning roller and the roll.

According to still another aspect of the present disclosure, there is provided a roller cleaning device including a cleaning part in an apparatus for manufacturing a secondary battery that includes a plurality of roller configured to contact a substrate coated with slurry for a secondary battery and a support structure supporting the rollers, the cleaning part being provided to one of the rollers and configured to remove contaminants from a surface of the roller by contacting the roll, a driving part that drives the cleaning part, and a controller that controls the driving part.

The driving part may include: a lifting carrier is vertically movable in one of the side columns; an actuator configured to adjust a height of the lifting carrier; and an output motor provided with the lifting carrier and configured to transmit a rotational force to the cleaning roller.

The cleaning roller may include a hollow roller body and a cleaning cloth on an outer surface of the roller body, and the driving part may include: a hollow tube fixed to an end of the roller body and extending to one of the side columns; a lifting carrier that rotatably supports the tube and is vertically movable inside the one of the side columns; an output motor connected to the lifting carrier and configured to provide an axial force for rotating the tube; and an actuator configured to adjust a height of the lifting carrier.

A plurality of through-holes may be formed in a periphery of the roller body, and a cleaning liquid supply part may be connected to an end of the tube and is configured to supply a cleaning liquid to the tube.

The roller cleaning device may further comprise a sensor configured to detect contact between the cleaning roller and the roller and transmit a signal indicating the contact to the controller.

The support structure may include a base supporting side columns fixed onto the base, with the side columns facing each other, and with the side columns rotatably supporting opposite ends of the roll, and the driving part may include a three-dimensional motion output part provided on the base, the three-dimensional motion part being configured such that its location thereof is adjustable, and the three-dimensional motion part being configured to move the cleaning part in a front-rear direction, a left-right direction, and an up-down direction.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The above and other objects, features, and advantages of the present disclosure will become more apparent to those of ordinary skill in the art by the example embodiments described herein with reference to the accompanying drawings, in which:
FIG. 1 is a schematic view of an electrode assembly of a secondary battery;
FIG. 2 is a view of the inside of a pouch-type battery to which the electrode assembly of FIG. 1 is applied;
FIG. 3 is a cross-sectional view of a cylindrical battery;
FIG. 4 is a perspective view of the exterior of a prismatic battery;
FIG. 5 is a cross-sectional view along line A-A of FIG. 4;
FIG. 6 is a schematic diagram of a process of manufacturing an electrode plate of the electrode assembly according to embodiments of the disclosure;
FIG. 7 is a view of a cleaning device according to embodiments of the present disclosure;
FIG. 8 is a view illustrating a basic structure of an apparatus for manufacturing a secondary battery according to the embodiments of the present disclosure;
FIGS. 9 and 10 are views of the cleaning device in the apparatus illustrated in FIG. 8;
FIG. 11 is a view of a driving part for driving the cleaning roller of FIG. 8;
FIG. 12 is a cross-sectional view along line D-D of FIG. 8;
FIG. 13 is a view of the cleaning cloth illustrated in FIG. 12 in an unfolded state;
FIG. 14 is a cutaway view of another example of the cleaning device according to the embodiments of the present disclosure;
FIGS. 15 to 17 are views of another example of the cleaning device according to the embodiments of the present disclosure; and
FIG. 18 is a flowchart of a method of manufacturing a secondary battery according to the embodiments of the present disclosure.

### DETAILED DESCRIPTION OF EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Although terms such as first and second are used to describe various components, these components are not limited by these terms. These terms are used only to distinguish a first component from a second component, and it is obvious that the first component may be the second component unless otherwise stated.

Throughout the specification, unless otherwise stated, each element may be singular or plural.

Arranging an arbitrary element "above (or below)" or "on (or under)" another element may mean that the arbitrary element may contact the upper (or lower) surface of the element, and another element may also be interposed between the element and the arbitrary element located on (or under) the element.

Further, it will be understood that if an element is referred to as being "on," "connected to," or "coupled to" another element, it may be directly on, connected, or coupled to the other element, but another element may be "interposed" between the elements or the elements may be "connected to" or "coupled to" each other through still another embodiment.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated. When "C to D" is stated, it means C or more and D or less, unless otherwise specified.

When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

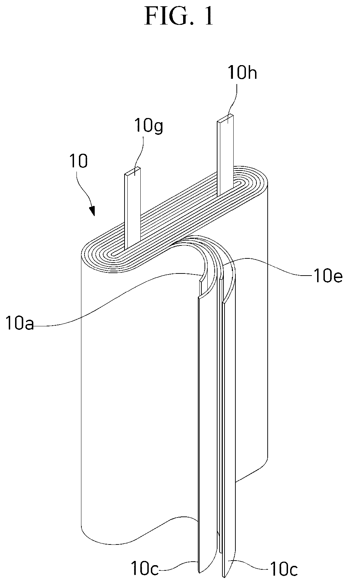

FIG. 1 is a schematic view of an electrode assembly 10 including electrode plates 10a, 10e manufactured using an apparatus for manufacturing a secondary battery according to embodiments of the present disclosure.

An electrode assembly 10 may be formed by winding or stacking a stack of a first electrode plate 10a, a separator 10c, and a second electrode plate 10e, each of which are formed as thin plates or films. When the electrode assembly 10 is a wound stack, a winding axis may be parallel to the longitudinal direction of a case (not illustrated).

The electrode assembly 10 may be a stack type rather than a winding type, and the shape of the electrode assembly 10 is not limited in the present disclosure. In addition, the electrode assembly 10 may be a Z-stack electrode assembly in which a first electrode plate and a second electrode plate are inserted to opposite sides of a separator, and the plates and separator are then bent into a Z-stack.

One or more electrode assemblies 10 may be stacked such that long sides of the electrode assemblies 10 are adjacent to each other and accommodated in a case. The number of electrode assemblies 10 in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying a first electrode active material, such as graphite or carbon, onto a first substrate formed of a metal foil, such as copper, a copper alloy, nickel, or a nickel alloy. The first electrode plate 10a may include a first electrode tab 10g (e.g., a first uncoated portion), which is a region in which no first electrode active material is provided. The first electrode tab 10g may be connected to an external first terminal (not illustrated). In some embodiments, when the first electrode plate 10a is manufactured, the first electrode tab 10g may be formed by cutting to protrude from a side of the electrode assembly 10. In other embodiments, the first electrode tab 10g may protrude form a side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a substrate formed of a metal foil, such as aluminum or an aluminum alloy. The second electrode plate 10e may include a second electrode tab 10h (e.g., a second uncoated portion), which is a region to where the second electrode active material is not provided. The second electrode tab 10h may be connected to an external second terminal (not illustrated). In some embodiments, the second electrode tab 10h may be formed by cutting to protrude from a second side (e.g., a side opposite the first side from which the first electrode protrudes) of the electrode assembly 10. In other embodiments, the second electrode plate 10e may protrude from the second side of the electrode assembly more than (e.g., farther than or beyond) the separator 10c without being separately cut.

In embodiments, the first electrode tab 10g may be located on a side surface of a right end of the electrode assembly 10, the second electrode tab 10h may be located on a side surface of a left end of the electrode assembly 10, or the first electrode tab 10g and the second electrode tab 10h may be located on one surface in the same direction. Further, in some embodiments, the first electrode tab 10g and the second electrode tab 10h may be located above the electrode assembly 10. Here, the left side, the right side, and the upper side are based on the electrode assembly 10 illustrated in FIG. 1, and these locations may be changed when the secondary battery rotates in a left-right direction or a vertical direction.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

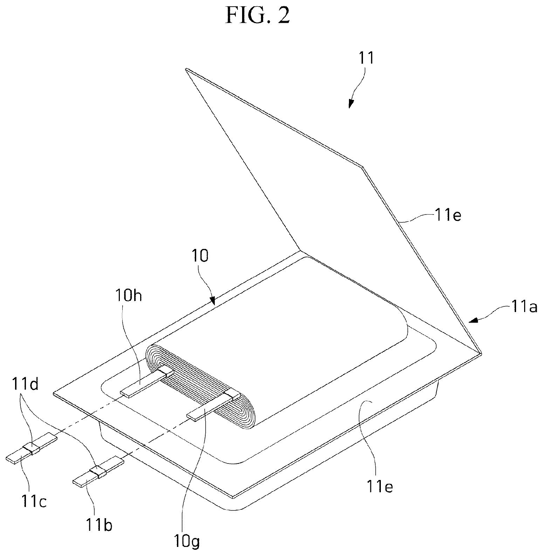

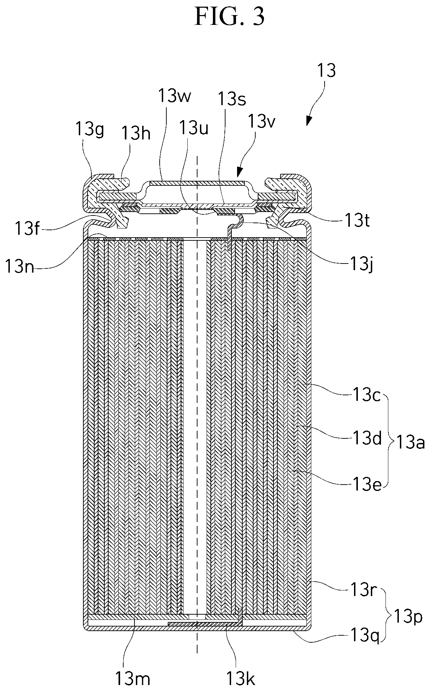

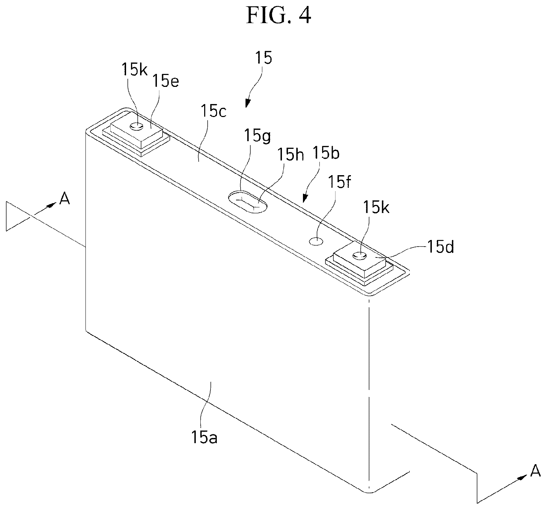

In some embodiments, the electrode assembly 10 may be accommodated in a case along with an electrolyte. In a pouch-type secondary battery, the electrode assembly 10 may be accommodated in a pouch made of flexible material (see FIG. 2). In a cylindrical or prismatic secondary battery, the electrode assembly 10 may be accommodated in a cylindrical or prismatic metal casing (see FIGS. 3 and 4 respectively).

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-6-c}Mn_{d}X_{c}O_{2-α}D_{α} (0.90≤a≤1.8, 0≤b≤0.5, 0≤c≤0.5, 0<α<2); LiₐNi_{b}Co_{c}L¹ₐGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{d}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The amount of the positive electrode active material may be in a range of about 90 wt% to about 99.5 wt% based on 100 wt% of the positive electrode active material layer, and the amount of the binder and the conductive material may be in a range of about 0.5 wt% to about 5 wt%, respectively, based 100 wt% of the positive electrode active material layer.

The substrate may be aluminum (Al), but the present disclosure is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material. This material may include, for example, crystalline carbon, amorphous carbon, or a combination thereof. Examples of the crystalline carbon include graphite, such as natural graphite or artificial graphite, and examples of the amorphous carbon include soft carbon, hard carbon, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to one embodiment, the silicon-carbon composite may be in the form of silicon particles and amorphous carbon coated on the surfaces of the silicon particles.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material. For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt. The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, or combinations thereof, and may be used alone or in combination of two or more. When a carbonate-based solvent is used, a mixture of cyclic carbonate and chain carbonate may be used.

Depending on the type of lithium secondary battery, a separator may be provided between the positive electrode and the negative electrode. The separator may be formed from polyethylene, polypropylene, polyvinylidene fluoride, or a multilayer film including two or more layers thereof.

The separator 10c may include a porous substrate and a coating layer including an organic material, an inorganic material, or a combination thereof on one or both surfaces of the porous substrate. The organic material may include a polyvinylidene fluoride-based polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but the present disclosure is not limited to these examples. The organic material and the inorganic material may be mixed in one coating layer or may be in the form of a coating layer including an organic material and a coating layer including an inorganic material that are stacked on each other.

FIG. 2 is a schematic view of a pouch-type battery 11 that includes the electrode assembly 10 of FIG. 1.

The pouch-type battery 11 includes the electrode assembly 10 and a pouch 11a that accommodates the electrode assembly 10. The apparatus for manufacturing a secondary battery according to the present embodiments (described below) may be used to manufacture the electrode plates 10a, 10e of the electrode assembly 10 of the battery 11. A first electrode tab 10g and a second electrode tab 10h of the electrode assembly 10 as illustrated in FIG. 2 may be electrically connected to respective external first and second terminal leads 11b, 11c by welding. Each of the first terminal lead 11b and the second terminal lead 11c may be attached with a tab film 11d for insulation from the pouch 11a.

The pouch 11a may be sealed by sealing parts 11e that are provided at the edges of pouch 11a. The sealing parts 11e contact with each other when the electrode assembly 10is accommodated in the pouch 11a. In such a case, the sealing may be achieved with the tab film 11d interposed between the sealing parts 11e. The sealing parts 11e of the pouch 11a may each be made of a thermal fusion material that has weak adhesion to metal. Thus, the pouch 11a by fused by interposing the thin tab film 11d between the sealing parts 21.

FIG. 3 is a cross-sectional view of a cylindrical battery 13. The apparatus for manufacturing a secondary battery according to the present embodiments (described below) may be used to manufacture an electrode plate of the cylindrical battery 13.

A cylindrical battery 13 may include an electrode assembly 13a, a case 13p accommodating the electrode assembly 13a and an electrolyte therein. A cap assembly 13v may be coupled to an opening of the case 13p to seal the case 13p. An insulating plate 13n may be positioned between the electrode assembly 13a and the cap assembly 13v inside the case 13p.

The electrode assembly 13a may include a first electrode 13c and a second electrode 13e, with a separator 13d interposed between the electrodes 13c, 13e. The electrode assembly 13a may be wound in a jelly-roll shape.

The first electrode 13c includes a first substrate and a first active material layer on the first substrate. A first lead tab 13j may extend outwardly from a first uncoated portion of the first substrate from a part where the first active material layer is not provided, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate from a part where the second active material layer is not provided, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include, for example, graphite.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and an electrolyte. The case 13p and the cap assembly 13v form the external appearance of the secondary battery 13. The case 13p may have a substantially cylindrical body portion 13r and a bottom portion 13q connected to the body portion 13r. A beading part 13f deformed inwardly may be formed in the body portion 13r, and a crimping part 13g bent inwardly may be formed at an open end of the body portion 13r.

The beading part 13f can reduce or prevent movement of the electrode assembly 13a inside the case 13p and can facilitate seating of a gasket 13h and the cap assembly 13v. The crimping part 13g may firmly fix the cap assembly 13v by pressing the edge of the cap assembly 13v through the gasket 13h. The case 13p may be formed, for example, of iron plated with nickel.

The cap assembly 13v may be fixed to the inside of the crimping part 13g by the gasket 13h to seal the case 13p. The cap assembly 13v may include an upper cap 13w, a safety vent 13s, a lower cap 13t, an insulating member, and a sub plate 13u. But the present disclosure is not limited to such a configuration and may be modified in various ways.

The upper cap 13w may be positioned at the uppermost part of the cap assembly 13v. The upper cap 13w may include a terminal part that protrudes upwardly and is connected to an external circuit. An outlet for discharging gas may be arranged around the terminal part.

The safety vent 13s may be located under the upper cap 13w. The safety vent 13s may include a protrusion part that protrudes convexly downwardly and is connected to the sub plate 13u. At least one notch located around the protrusion part. When gas is generated due to overcharging or abnormal operation of the secondary battery, the protrusion part is deformed upwardly by the gas pressure and separates from the sub plate 13u while the safety vent 13s is opened along the notch. The opened safety vent 13s may prevent the secondary battery from exploding by allowing for the gas to be discharged to outside of the battery.

The lower cap 13t may be below the safety vent 13s. The lower cap 13t may have a first opening for exposing the protrusion part of the safety vent 13s and a second opening for gas discharge. The insulating member may be positioned between the safety vent 13s and the lower cap 13t to insulate the safety vent 13s and the lower cap 13t.

The sub plate 13u may be under the lower cap 13t. The sub plate 13u may be fixed to a lower surface of the lower cap 13t to block the first opening of the lower cap 13t, and the protrusion part of the safety vent 13s may be fixed to the sub plate 13u. The first lead tab 13j, which extends from the electrode assembly 13a, may be fixed to the sub plate 13u. Accordingly, the upper cap 13w, the safety vent 13s, the lower cap 13t, and the sub plate 13u may be electrically connected to the first electrode 13c of the electrode assembly 13a.

An insulating plate 13n may be positioned to be in contact with the electrode assembly 13a below the beading part 13. The insulating plate 13n may have a tab opening through which the first lead tab 13j extends. The cap assembly 13v, which is electrically connected to the first electrode 13c by the first lead tab 13j, may face the electrode assembly 13a with the insulating plate 13n interposed therebetween. As such, the cap assembly 13v may be insulated from the electrode assembly 13a by the insulating plate 13n. Another insulating plate 13m for insulation between the electrode assembly 13a and the bottom portion 13q of the case 13p may be included.

FIG. 4 is an upper perspective view of an external appearance of the prismatic battery 15. An electrode plate in the prismatic battery 15 may be manufactured using the apparatus for manufacturing a secondary battery according to the present embodiments.

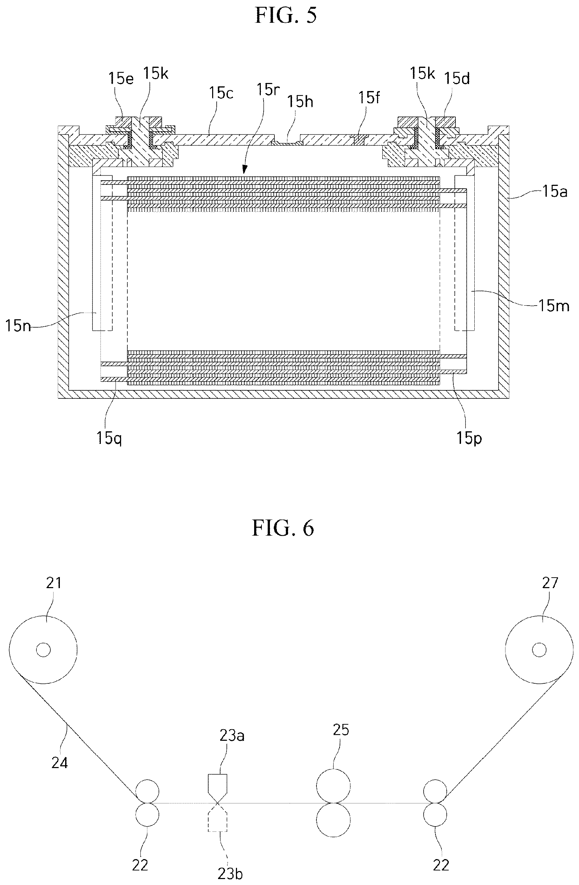

A case 15a defines an outer appearance of the prismatic secondary battery 15. The case 15a may be made of a conductive metal, such as aluminum, aluminum alloy, or nickel-plated steel. In addition, the case 15a may provide a space for accommodating an electrode assembly (15r, FIG. 5) therein.

A cap assembly 15b may include a cap plate 15c that covers an opening of the case 15a. In some examples, the case 15a and the cap plate 15c may be made of a conductive material. Here, a first terminal 15d and a second terminal 15e may be electrically connected to respective positive and negative electrodes in the case 15a, and the terminals 15d, 15e may protrude outward through the cap plate 15c.

The cap plate 15c may include an electrolyte injection port 15f, a gas discharge hole 15g, and a vent. A gas discharge device 15h, may be joined to the gas discharge hole 15g. The gas discharge device 15h is open by gas generated inside the battery to allow for the gas to be discharged from the battery.

FIG. 5 is a cross-sectional view along line A-A of FIG. 4 and illustrates an internal configuration of the prismatic battery 15 and a structure of the cap assembly 15b.

The electrode assembly 13a may be formed by winding or stacking a first electrode plate, a separator, and a second electrode plate, which are formed as thin plates or films. When the electrode assembly 15r is a wound stack (e.g., a jelly roll), a winding axis may be parallel to the longitudinal direction of the case. Further, the electrode assembly 15r may be a stack type rather than a winding type. However, the shape of the electrode assembly 15r is not limited in the present disclosure.

In addition, the electrode assembly 15r may be a Z-stack electrode assembly in which a first electrode plate and a second electrode plate are provided to opposite sides of the separator, with the electrode plates and the separator then being bent into a Z-stack. In addition, in the electrode assembly 15r, one or more electrode assemblies may be stacked such that long sides of the electrode assemblies are adjacent to each other and accommodated in the case. The number of electrode assemblies in the case 15a is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode substrate formed of a metal foil, such as copper, a copper alloy, nickel, a nickel alloy, or the like. The first electrode plate may include a first electrode tab (e.g., a first uncoated portion), which is a region where the first electrode active material is not provided. The first electrode tab 15p may act as a current flow path between the first electrode plate and a first current collector plate 15m. In some embodiments, when the first electrode plate is manufactured, the first electrode tab 15p is formed by cutting and protrudes from a first side of the electrode assembly 15r. In other embodiments, the first electrode tab 15p protrudes from the first side of the electrode assembly 15r more than the separator without being separately cut.

The second electrode plate may be formed by applying a second electrode active material, such as a transition metal oxide, on a substrate formed of a metal foil, such as aluminum or an aluminum alloy. The second electrode plate may include a second electrode tab 15q (e.g., a second uncoated portion), which is a region where the second electrode active material is not applied. The second electrode tab 15q may act as a current flow path between the second electrode plate and the second current collector 42. In some embodiments, the second electrode tab 15q may be formed by cutting and protrude from a second side of the electrode assembly. In other embodiments, the second electrode plate may protrude from the second side of the electrode assembly 15r more than the separator without being separately cut.

It is illustrated in FIG. 5 that the first electrode tab 15p and the second electrode tab 15q are located on a right surface and a left surface of the electrode assembly 15r. But in other embodiments both the first electrode tab 15p and the second electrode tab 15q may be located on the right surface or the left surface of the electrode assembly 15r. Here, the left side and the right side of the electrode assembly 15r are based on the battery illustrated in FIG. 3B. The left surface means a vertical surface of the electrode assembly 15r to which a second current collector plate 15n is joined, and the right surface is an opposite surface to which the first current collector plate 15m is joined. Thus, the terms left surface and the right surface of the electrode assembly 15r may be change when the battery 15 rotates in a left-right direction or a vertical direction.

The separator prevents or substantially reduces instances of a short circuit between the first electrode plate and the second electrode plate while allowing movement of lithium ions therebetween. The separator may be made of, for example, a polyethylene film, a polypropylene film, a polyethylene-polypropylene film, or the like.

In some embodiments, the electrode assembly 15r may be accommodated in the case 15a along with an electrolyte. In the electrode assembly 15r, the first electrode tabs 15p and the second electrode tabs 15q protruding from the first electrode plate and the second electrode plate may be connected to the first current collector plate 15m and the second current collector plate 15n.

The first current collector plate 15m and the second current collector plate 15n are electrically connected to the first terminal 15d and the second terminal 15e through connection members 15k. In some embodiments, the connection members 15k may each have an outer peripheral surface that is threaded and may be fastened to the first terminal 15d and the second terminal 15e by screwing. However, the present disclosure is not limited to such a configuration. For example, the connection members 15k may also be coupled to the first terminal 15d and the second terminal 15e by riveting or welding.

FIG. 6 is a schematic view for describing a process of manufacturing an electrode plate of an electrode assembly according to embodiments of the disclosure

A supply roller 21 is provided on which a substrate 24 for an electrode plate is wound. When an apparatus for manufacturing electrode plates according to the present disclosure is used to manufacture a positive electrode plate, the substrate 24 may be, for example, a metal foil containing aluminum (Al). Alternatively, when the apparatus for manufacturing electrode plates according to the present disclosure is used to manufacture a negative electrode plate, the substrate 24 may be, for example, a metal foil containing copper (Cu) or nickel (Ni).

A transfer roller 22 may be an idle roller that guides the substrate 24 unwounded from the supply roll 21 or a drive roller that applies a pulling force to unwind the substrate 24 from the supply roll 21. Four transfer rollers 22 are illustrated in the example depicted in FIG. 6, but the number and positions of transfer rollers may be changed as needed.

A coating unit 23a forms a coating layer of an electrode material slurry on the substrate 24. Here, the coated slurry includes an active material. For example, when the apparatus for manufacturing an electrode plate according to the present disclosure is used to manufacture a positive electrode plate, the slurry may include an active material such as a transition metal oxide, a binder, a volatile solvent, and the like. When the negative electrode plate is manufactured, the slurry may include an active material such as a transition metal oxide, a binder, a solvent, and the like. Further, in some embodiments both surfaces, namely the upper and lower surfaces, of the substrate 24 are coated at the same time. In such embodiments, a second coating unit 23b is provided the same configuration as the coating unit 23a, with the second coating unit 23b being configured to provide a coating layer to a lower surface of the substrate 24.

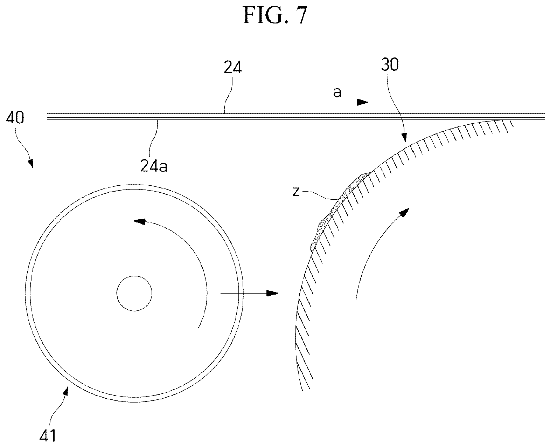

As shown in FIG. 7, a cleaning device 40 may be applied to the coating unit 23a;23b. The cleaning device 40 serves to remove the slurry (hereinafter referred to as a residue material) transferred to the surface of a coating roller 30 of the coating unit 23b. The cleaning device 40 will be described below.

A press unit 25, i.e., a rolling unit, includes rollers to compress the substrate 24 coated with the slurry by the coating unit 23a. Roll pressing provides for a high-capacity and high-density secondary battery.

A winding roll 27 is provided to wind and accommodates an electrode plate that has been coated and rolled by the coating unit 23a and the press unit 25.

Although not illustrated in FIG. 6, a drying unit may be provided between the coating unit 23a and the winding roll 27 to dry or solidify the slurry-coated substrate 24. The drying unit may include a heat source and may be physically separated from the press unit 25 or may be functionally integrated into the press unit 25. For example, when the press unit 25 is configured in the form of a roller, the heat source may be positioned in the roller to heat the coating layer while the roller rolls the coating layer. Thus, the press unit 25 may also function as the drying unit.

FIG. 7 is a view illustrating a cleaning device according to embodiments of the present disclosure. It can be seen that the substrate 24 coated with slurry 24a is transferred in a direction of arrow a by roller 30. "Roller" in the following description may include all rollers in contact with the transferred substrate. The roller may include a coating roller.

As illustrated in FIG. 7, a residue material z may be transferred to a surface of the roller 30. The residue material z is a portion of the slurry 24a that is used to coat the electrode plate but is transferred and adhered to the surface of the roller 30. The residue material therefore is an object to be removed from the roller 30. The cleaning device 40 included in an apparatus 20 is configured to remove the residue material z adhered to an outer circumferential surface of the roller 30.

A location of a cleaning roller 41 included in the cleaning device 40 may be adjusted with respect to the roller 30. For example, the cleaning roller 41 may be spaced apart from the roller 30 and periodically move toward the roller 30 to wipe the residue material on the roller 30. In the related art that does not include the cleaning device 40, it may be necessary for an operator to approach rotating rollers to wipes off the residue material by hand, which may be dangerous.

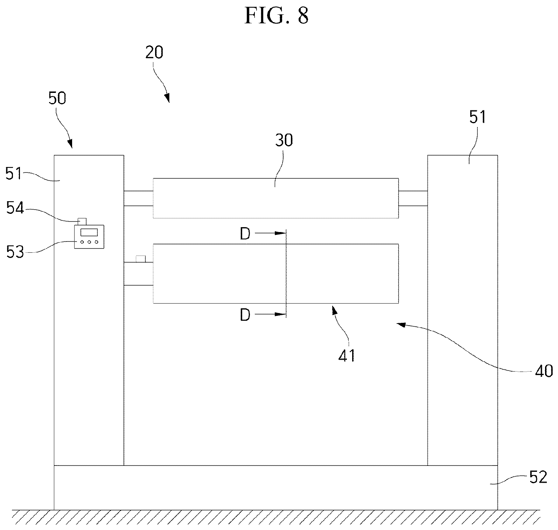

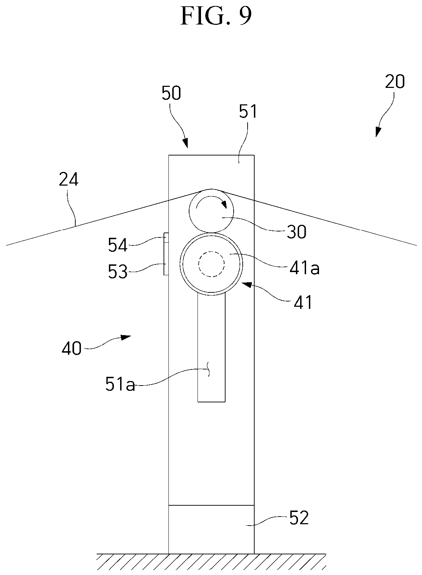

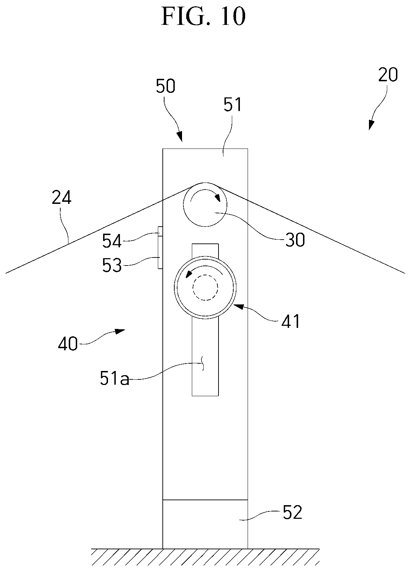

FIG. 8 is a front view of an apparatus 20 for manufacturing a secondary battery according to the embodiments of the present disclosure, and FIGS. 9 and 10 are side views of the cleaning device in the apparatus in FIG. 8.

As illustrated, the apparatus 20 for manufacturing a secondary battery according to the present embodiments includes a support structure 50, a cleaning part, a driving part, and a controller 53.

The support structure 50 may be located on a transfer path of the substrate and may horizontally support the roller 30. Opposite ends of the roller 30 may be rotatably supported by the support structure 50. The roller 30 may provide a conveying force to the substrate 24 by rotation of the roller 30 about its axis. The support structure 50 may include a base 52 and a pair of side columns 51. The base 52 may be a hollow frame structure horizontally fixed to the ground and may provide a support force.

The side columns 51 may be fixed to the base 52 and extend vertically. The side columns 51 may be arranged to face each other on opposite sides of the base 52. The side columns 51 may support the opposite ends of the roller 30. The driving parts that rotate the roller 30 may be provided in the side columns 51.

As illustrated in FIG. 9, the roller 30 may be supported by the side columns 51 to allow the substrate 24 to pass by while maintained in a horizontal state. In operation, the substrate 24 may be coated with the slurry 24a.

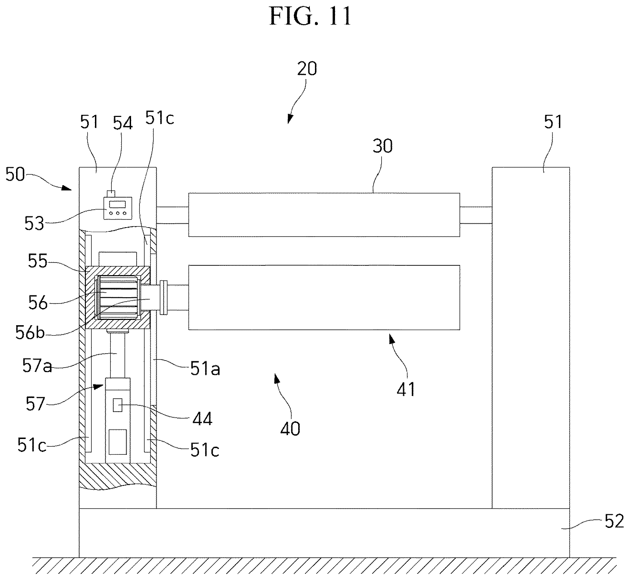

As shown in FIG. 9, a vertical extension passage 51a may be formed in an inner surface of one of the side columns 51. The vertical extension passage 51a may be a slit-shaped through-hole having a predetermined width and extending vertically. As illustrated in FIG. 11, the vertical extension passage 51a may be a passage through which a drive shaft 56a extends.

As illustrated in FIG. 8, a controller 53 and a communication module 54 may be provided with one of the side columns 51. The controller 53 may be connected to the driving part (which will be described below) and may control an operation of the driving part. The controller 53 may include a switch, a button, and a display unit through which an operating condition of the driving part is input. For example, the operator may reserve the operation of the driving part through the controller 53. The controller 53 may automatically operate the driving part at an operating time that is input by the operator.

The communication module 54 may be wirelessly connected to a terminal, may receive a wireless signal from the terminal being operated the operator, and transmit a received instruction to the controller 53. The terminal may be, for example, a smartphone. The operator may remotely input operating instructions such as an operation time or a driving condition of the cleaning device 40 using his/her terminal.

The cleaning part may be provided on the support structure 50, may adjust a relative location of the roller 30. As discussed above, the cleaning part can remove contaminants (residue materials) on the roller 30 by moving into contact with the roller 30. The cleaning part in the present embodiments is the cleaning roller 41. The cleaning roller 41 receives a rotational force from a drive shaft of an output motor 56.

The cleaning device 40 including the cleaning roller 41 illustrated in FIG. 8 may be vertically movable. That is, the cleaning roller 41 may be in a lowered state as illustrated in FIG. 9 and may be raised to contact a lower portion of the roller 30 to clean the roller 30. FIG. 10 illustrates a state in which the cleaning roller 41 is in contact with the lower portion of the roller 30 to remove the residual material from the surface of the roller 30. A location and a rotational speed of the cleaning roller 41 may be adjusted by the driving part.

FIG. 11 is a view of the driving part for driving the cleaning roller 41. As illustrated, the driving part may include a lifting carrier 55, a vertical rail 51c, the output motor 56, and an actuator 57.

The lifting carrier 55 may be a box-shaped member that is vertically movable inside the side column 51. The lifting carrier 55 may vertically move while supporting the vertical rail 51c. The vertical rail 51c may be vertically fixed inside the side column 51 and may guide a vertical movement of the lifting carrier 55.

The output motor 56 may be embedded in the lifting carrier 55 and transmit a rotational force to the cleaning roller 41. A drive shaft 56a of the output motor 56 may extend to outside of the side column 51 while passing through the vertical extension passage 51a and may be fixed to an end of the cleaning roller 41. The cleaning roller 41 may axially rotate by operation of the output motor 56 to wipe off the residue material z. The output motor 56 may be controlled by the controller 53. The rotational speed and a rotational direction of the cleaning roller 41 may be adjusted by the controller 53.

The actuator 57 may adjust a height of the lifting carrier 55. The actuator 57 may be an electric actuator and may be provided under the lifting carrier 55. An upper end portion of a piston rod 57a of the actuator 57 may be fixed to a bottom surface of the lifting carrier 55. The actuator 57 may be controlled by the controller 53 such that the height of the lifting carrier 55 may be adjusted by the controller 53. Thus, the height of the cleaning roller 41 may be adjusted by the controller 53.

The actuator 57 may be provided with a sensor unit 44. The sensor unit 44 may detect contact between the cleaning roller 41 and the roller 30 and transmit the detected content to the controller 53. The controller 53 may operate the output motor 56 in a state in which the cleaning roller 41 is in contact with the roller 30. On the other hand, the cleaning roller 41 does not necessarily rotate when in a lowered state.

The sensor unit 44 may output a detection signal through a change in a load value applied to the piston rod 57a. When the cleaning roller 41 is already raised and cannot be further raised due to contact with the roller 30, a load value applied to the piston rod 57a may increase. In such a case, a signal may be output. Other types of sensing methods also may be applied.

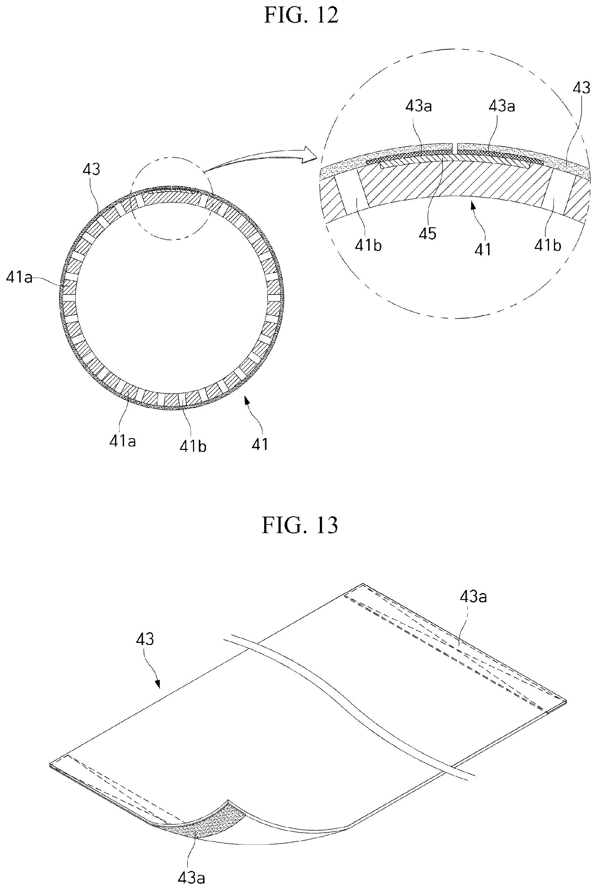

FIG. 12 is a cross-sectional view along line D-D of FIG. 8, and FIG. 13 is a view of a cleaning cloth 43 illustrated in FIG. 12 in an unfolded state.

The cleaning roller 41 may include a roller body 41a and the cleaning cloth 43. The roller body 41a has a predetermined diameter. A diameter of the roller body 41a may vary depending on the particular implementation. The roller body 41a may be made of aluminum or a synthetic resin. Through-holes 41b may be formed in the roller body 41a.

The cleaning cloth 43 may surround the roller body 41a. As illustrated in FIG. 13, the cleaning cloth 43 include adhesive cloths 43a on opposite ends thereof. The adhesive cloths 43a may be a Velcro tape. The adhesive cloth 43a may be fixed to an adhesive cloth 45 that is fixed to the roller body 41a. The fixed adhesive cloth 45 may be a Velcro tape corresponding to the adhesive cloth 43a and may be remain fixed to an outer circumferential surface of the roller body 41a.

When the cleaning cloth 43 is unfolded, the roller body 41a is wrapped around the roller body 41a, the adhesive cloth 43a is fixed to the fixed adhesive cloth 45 at opposite ends. Thus, the cleaning cloth 43 may be coupled to the cleaning roller 41. The adhesive cloth 43a may be detached from the fixed adhesive cloth 45 and the cleaning cloth 43 may then be separated from the roller body 41a. After being separated, the cleaning cloth 43 can be washed.

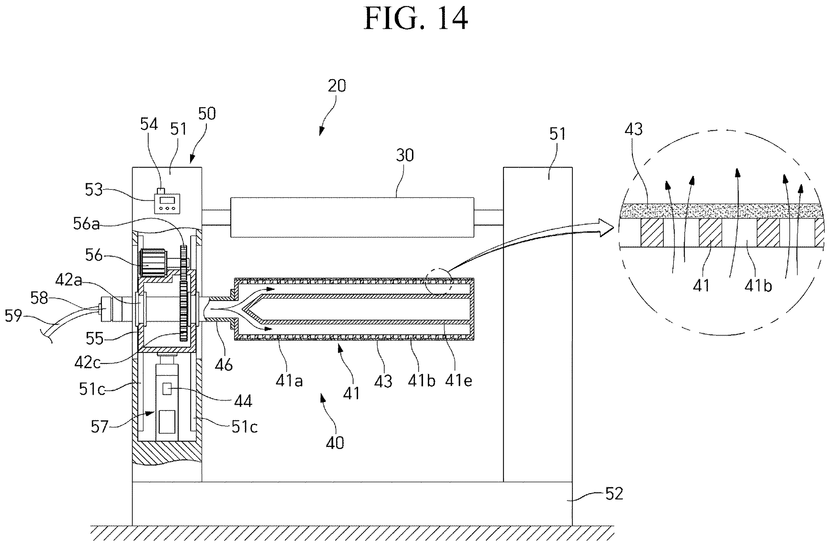

FIG. 14 is a cutaway view illustrating another example of the cleaning device according to the embodiments of the present disclosure.

The apparatus 20 illustrated in FIG. 14 includes the support structure 50, the cleaning roller 41, the driving part, the controller 53, and the communication module 54.

The driving part in the apparatus 20 may be provided with the cleaning roller 41, a tube 46, the lifting carrier 55, the output motor 56, a power transmission part, the actuator 57, and a cleaning liquid supply part.

An inner cylinder 41e may be provided inside the cleaning roller 41. The inner cylinder 41e may be a cylindrical member having a predetermined diameter and allow a cleaning liquid from outside to move close to an inner circumferential surface of the roller body 41a. The cleaning liquid may be maintained in a space between the outer circumferential surface of the inner cylinder 41e and the inner circumferential surface of the roller body 41a. By providing the inner cylinder 41e, when the cleaning roller 41 rotates, sloshing of the cleaning liquid accommodated in the cleaning roller 41 may be minimized, and the cleaning liquid may be discharged more quickly through the through-holes 41b.

The tube 46 may be a hollow tube fixed to an end of the roller body 41a and extend to inside of one of the side columns 51. As illustrated in FIG. 14, the tube 46 may extend horizontally and may pass through the side column 51 so as to be exposed on the opposite side. The tube 46 may be supported by the lifting carrier 55 through a tube bearing 42a and may be axially rotatable.

The output motor 56 may be positioned above the lifting carrier 55. The output motor 56 may be driven by receiving a control signal from the controller 53 and output a rotational force.

The power transmission part may serve to transmit the rotational force of the output motor 56 to the tube 46. The power transmission part may include a driving gear 56a and a driven gear 42c. The driving gear 56a may be fixed to the driving shaft of the output motor 56, and the driven gear 42c may be fixed to the tube 46 inside the lifting carrier 55. The driving gear 56a and the driven gear 42c may be engaged with each other through a passage formed in the lifting carrier 55.

The actuator 57 may be positioned below the lifting carrier 55. The actuator 57 may be operated by the controller 53 and may adjust the height of the lifting carrier 55.

The cleaning liquid supply part may provide the cleaning liquid to the tube 46. The cleaning liquid supplied into the tube 46 is moved to the cleaning roller 41, passes through the through-holes 41b, and wets the cleaning cloth 43. The cleaning liquid may be supplied when the cleaning roller 41 is rotating.

The cleaning liquid supply part may include a swivel connector 58 and a cleaning liquid supply hose 59. The cleaning liquid supply hose 59 may supply the cleaning liquid from outside to the tube 46 through the swivel connector 58. The swivel connector 58 prevents the cleaning liquid supply hose 59 from being twisted when the tube 46 rotates.

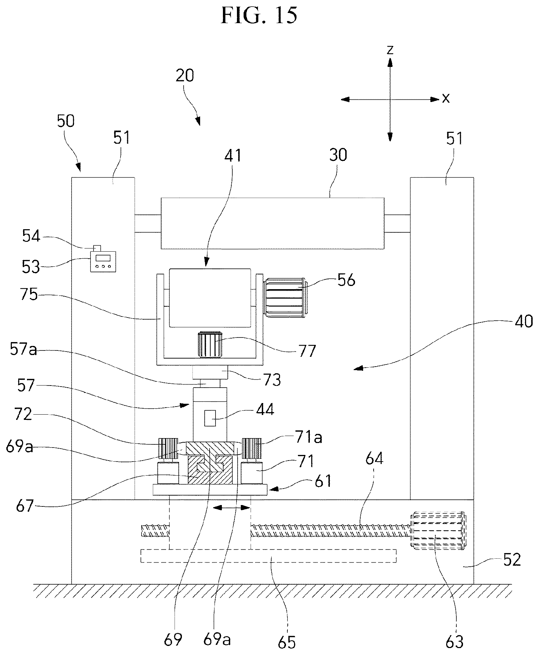

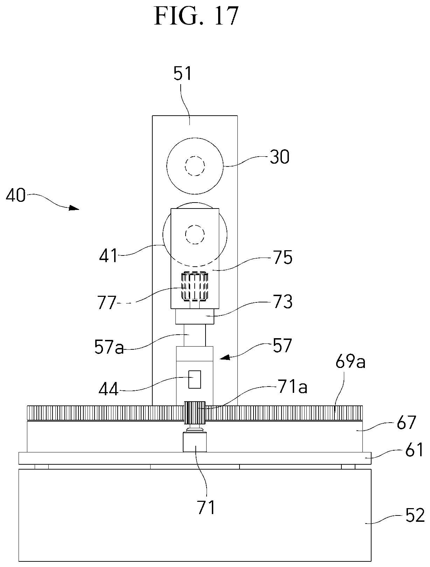

FIGS. 15 to 17 are views of another example of the apparatus 20 according to the embodiments of the present disclosure.

The apparatus 20 for manufacturing a secondary battery illustrated in FIGS. 15 to 17 includes the support structure 50, the cleaning part, the driving part, the controller 53, and the communication module 54.

The cleaning part may be the cleaning roller 41 that is adjustable relative to the roller 30 and be configured remove contaminants from the roller 30 while being in contact with the roll 30. The cleaning roller 41 illustrated in FIGS. 15 to 17 may be separate from the side column 51, have a shorter length than the roller 30, and moves nimbly.

The driving part that drives the cleaning roller 41 may include a three-dimensional motion output part. The three-dimensional motion output part may be installed on the base 52 such that a location thereof may be adjusted. The three-dimensional output part may adjust a location of the cleaning roller 41 in a front-rear direction, a left-right direction, and an up-down direction.

The three-dimensional motion output part may include a support bed 61, an X driving part, a slider 69, a Y driving part, and a Z driving part. The support bed 61 may be provided on the base 52 and be reciprocal in an X-axis direction, which is a width direction of the substrate, by the X driving part. The X driving part may include a bed transfer motor 63, a lead screw 64, and a guide rail 65.

The lead screw 64 may extend horizontally, may pass through the support bed 61, and may be axially rotated by the bed transfer motor 63. As the lead screw 64 is rotated, the support bed 61 may move in the X-axis direction. The guide rail 65 may support the support bed 61 and guide the movement of the support bed 61.

A horizontal extension beam 67 may be provided on the support bed 61. The horizontal extension beam 67 may be a linear member extending in a Y-axis direction perpendicular to the X-axis direction and may guide movement of the slider 69 in the Y-axis direction.

The slider 69 may be a linear member that is supported by the horizontal extension beam 67 on the support bed 61 and be slidable in the Y-axis direction. The linear movement of the slider 69 may be guided by the horizontal extension beam 67. Rack gears 69a may be provided at opposite ends of the slider 69 in a width direction.

The Y driving part may move the slider 69 in the Y-axis direction. The Y driving part may include a slide motor 71, a rack driving gear 71a, and an idle gear 72. The slide motor 71 may rotate the rack driving gear 71a by receiving a control signal from the controller 53. The rack driving gear 71a may be engaged with the rack gear 69a. The idle gear 72 may be located on an opposite side of the rack driving gear 71a and engaged with the rack gear 69a. The idle gear 72 may prevent the slider 69 from being eccentric to one side when the slider 69 moves linearly.

The actuator 57 may be vertically fixed to an upper portion of the slider 69. The actuator 57 may be the Z driving part that is provided with the slider 69 and vertically moves the cleaning roller 41 in a Z-axis direction. The sensor unit 44 may be provided with the actuator 57.

With the depicted configuration, the location of the cleaning roller 41 in a front-rear direction, a left-right direction, and an up-down direction may be adjusted by the X driving part, the Y driving part, and the Z driving part.

A support block 73 may be fixed to the upper end portion of the piston rod 57a of the actuator 57, and a support frame 75 may be mounted on an upper portion of the support block 73. The piston rod 57a is restrained so that only the vertical movement is possible and the axial rotation is not allowed.

The support frame 75 may rotate while supported on the support block 73. Further, the support frame 75 may rotatably support the horizontal cleaning roller 41. In addition, the output motor 56 that rotates the cleaning roller 41 may be provided on one side of the support frame 75.

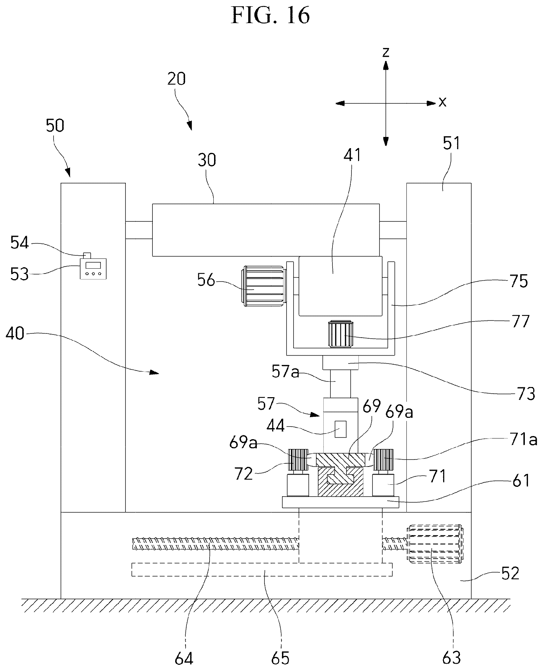

A rotation part may be further provided with the support frame 75. The rotation part may serve to rotate the support frame 75 180 degrees about the vertical Z axis. FIG. 16 illustrates a state in which the support frame 75 is rotated 180 degrees relative the position illustrated in FIG. 15.

The rotation part may include a switching motor 77. The switching motor 77 may be a motor vertically fixed to the support frame 75, and the driving shaft may pass through the support frame 75 and be embedded in the support block 73. The switching motor 77 may be controlled by the controller 53. When the switching motor 77 is driven, the driving shaft of the switching motor 77 is fixed to the support block 73, and, thus, a main body of the motor may rotate together with the support frame 75. As described above, the cleaning device 40 illustrated in FIGS. 15 to 17 may perform three-dimensional movement and rotational movement of the cleaning roller 41.

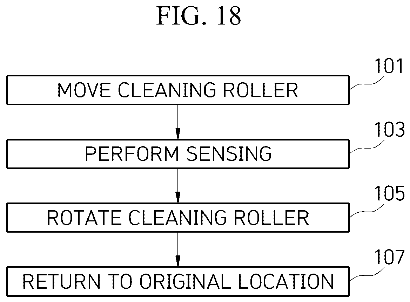

FIG. 18 is a flowchart of a method of manufacturing a secondary battery according to the embodiments of the present disclosure.

The method of manufacturing a secondary battery according to the present embodiments may include a cleaning roller movement operation 101, a sensing operation 103, a cleaning roller rotation operation 105, and a return to original location operation 107.

The cleaning roller movement operation 101 may be a process of moving the cleaning roller 41 that is spaced apart from the roller 30 to the roll 30 such that the cleaning roller 41 contacts the roller 30. That is, in the case of the embodiments illustrated in FIGS. 11 and 14, the lifting carrier 55 may be raised using the actuator 57, and in the case of the embodiments illustrated in FIG. 15, the cleaning roller 41 may be moved using the X driving part, the Y driving part, and the Z driving part.

The sensing operation 103 may be a process of identifying a contact state of the cleaning roller 41 with respect to the roller 30 by using the sensor unit 44. When the the cleaning roller 41 is in contact with the roller 30, the cleaning roller rotation operation 105 may be performed.

The cleaning roller rotation operation 105 may remove contaminants (e.g., residue) from the surface of the roller 30 by rotating the cleaning roller 41 that is in contact with the roller 30. The rotational speed and the rotational direction of the cleaning roller 41 may be controlled by the controller 53.

The subsequent return to original location operation 107 may be a process of moving the cleaning roller 41 away from the roller 30. The operator may replace the cleaning cloth 43 after the return to original location operation 107 is completed.

In the apparatus for manufacturing a secondary battery according to the present disclosure, because slurry is removed from a roller to which the slurry is transferred, a coating roller is frequently cleaned while equipment is driven. Thus, productivity and quality of a product are greatly improved, and accidents involving an operator are prevented.

Embodiments are set out in the following clauses.

Clause 1. An apparatus for manufacturing a secondary battery, the apparatus comprising: a roller configured to contact a substrate coated with a slurry for a secondary battery; a support structure rotatably supporting the roller; a cleaning part provided with the support structure and adjustable between a position spaced from the roller and a position in which the cleaning part is in contact with the roller, the cleaning part being configured to remove contaminants from the roller when the cleaning part is in contact with the roller; a driving part configured to drive the cleaning part; and a controller configured to control the driving part.

Clause 2. The apparatus of Clause 1, wherein the support structure includes a base configured to provide support and side columns fixed to the base, with the columns facing each other and supporting opposite ends of the roller, and wherein the cleaning part includes a cleaning roller that is supported by the side columns to be rotatable and vertically movable.

Clause 3. The apparatus of Clause 2, wherein the driving part includes: a lifting carrier is vertically movable in one of the side columns; an actuator configured to adjust a height of the lifting carrier; and an output motor provided with the lifting carrier and configured to transmit a rotational force to the cleaning roller.

Clause 4. The apparatus of Clause 2, wherein the cleaning roller includes a hollow roller body and a cleaning cloth on an outer surface of the roller body, and wherein the driving part includes: a tube fixed to an end of the roller body and extending to one of the side columns; a lifting carrier that rotatably supports the tube and is vertically movable inside the one of the side columns; an output motor connected to the lifting carrier and configured to provide a rotational force for rotating the tube; and an actuator configured to adjust a height of the lifting carrier.

Clause 5. The apparatus of Clause 4, wherein a plurality of through-holes are formed in a periphery of the roller body, and wherein a cleaning liquid supply part is connected to an end of the tube and is configured to supply a cleaning liquid to the tube.

Clause 6. The apparatus of Clause 2, further comprising a sensor configured to detect contact between the cleaning roller and the roller and transmit a signal indicating the contact to the controller.

Clause 7. The apparatus of Clause 1, wherein the support structure includes a base supporting side columns with the side columns facing each other, and with the side columns rotatably supporting opposite ends of the roller, and wherein the driving part includes a three-dimensional motion output part provided on the base, the three-dimensional motion output part being configured such that its location is adjustable, and the three-dimensional motion part being configured to move the cleaning part in a front-rear direction, a left-right direction, and an up-down direction.

Clause 8. The apparatus of Clause 7, wherein the three-dimensional motion output part includes: a support bed provided on the base; an X driving part configured to move the support bed in a width direction of the substrate; a slider provided on the support bed and configured to be slidable in a Y-axis direction perpendicular to the X-axis direction; a Y driving part configured to move the slider in the Y-axis direction; and a Z driving part provided on the slider and configured to vertically move the cleaning part in a vertical direction.

Clause 9. A roller cleaning device comprising: a cleaning part provided in an apparatus for manufacturing a secondary battery that includes a plurality of rollers configured to contact a substrate coated with slurry for a secondary battery and a support structure supporting the rollers, the cleaning part being provided to one of the rollers and configured to remove contaminants from a surface of the roller by contacting the roller; a driving part configured to drive the cleaning part; and a controller configured to control the driving part.

Clause 10. The roller cleaning device of Clause 9, wherein the support structure includes a base configured to provide support and side columns fixed to the base, with the side columns facing each other and supporting opposite ends of the roller, and wherein the cleaning part includes a cleaning roller that is supported by the side columns to be rotatable and vertically movable.

Clause 11. The roller cleaning device of Clause 10, wherein the driving part includes: a lifting carrier is vertically movable in one of the side columns; an actuator configured to adjust a height of the lifting carrier; and an output motor provided with the lifting carrier and configured to transmit a rotational force to the cleaning roller.

Clause 12. The roller cleaning device of Clause 10, wherein the cleaning roller includes a hollow roller body and a cleaning cloth on an outer surface of the roller body, and wherein the driving part includes: a hollow tube fixed to an end of the roller body and extending to one of the side columns; a lifting carrier that rotatably supports the tube and is vertically movable inside the on of the side columns; an output motor connected to the lifting carrier and configured to provide an axial force for rotating the tube; and an actuator configured to adjust a height of the lifting carrier.

Clause 13. The roller cleaning device of Clause 10, further comprising a sensor configured to detect contact between the cleaning roller and the roller and transmit a signal indicating the contact to the controller.

Clause 14. The roller cleaning device of Clause 9, wherein the support structure includes a base supporting side columns fixed onto the base, with the side columns facing each other, and with the side columns rotatably supporting opposite ends of the roll, and wherein the driving part includes a three-dimensional motion output part provided on the base, the three-dimensional motion part being configured such that its location thereof is adjustable, and the three-dimensional motion part being configured to move the cleaning part in a front-rear direction, a left-right direction, and an up-down direction.

Clause 15. A method of cleaning in an apparatus for manufacturing a secondary battery, the method comprising: a cleaning roller movement operation of using a driving part of the apparatus to move a cleaning roller toward a roller, with the apparatus including a support structure rotatably supporting the roller in contact with a substrate coated with slurry for a secondary battery, and with the cleaning roller provided with the support structure and being configured to contact the roller to remove contaminants from the roller, and with the driving part operating the cleaning roller; and a cleaning roll rotation operation of rotating the cleaning roller in contact with the roller to remove contaminants from a surface of the roller.

Although the present disclosure has been described above with respect to embodiments thereof and the accompanying drawings, the present disclosure is not limited thereto. Various modifications and variations can be made thereto by those skilled in the art within the scope of the present disclosure.

## Claims

1. A roller cleaning device comprising:
a cleaning part configured to be provided in an apparatus for manufacturing a secondary battery that includes one or more rollers configured to contact a substrate coated with slurry for a secondary battery and a support structure supporting the rollers, the cleaning part being operatively associated with one of the rollers and configured to remove contaminants from a surface of the roller by contacting the roller;
a driving part configured to drive the cleaning part; and
a controller configured to control the driving part.

2. The roller cleaning device as claimed in claim 1, wherein the support structure includes:
a base configured to provide support; and
side columns fixed to the base, with the side columns facing each other and supporting opposite ends of the roller, and
wherein the cleaning part includes a cleaning roller that is supported by the side columns so as to be rotatable and vertically movable.

3. The roller cleaning device as claimed in claim 2, wherein the driving part includes:
a lifting carrier vertically movable in one of the side columns;
an actuator configured to adjust a height of the lifting carrier; and
an output motor provided with the lifting carrier and configured to transmit a rotational force to the cleaning roller.

4. The roller cleaning device as claimed in claim 2, wherein the cleaning roller includes a hollow roller body and a cleaning cloth on an outer surface of the roller body, and
wherein the driving part includes:
a hollow tube fixed to an end of the roller body and extending to one of the side columns;
a lifting carrier that rotatably supports the tube and is vertically movable inside the one of the side columns;
an output motor connected to the lifting carrier and configured to provide an axial force for rotating the tube; and
an actuator configured to adjust a height of the lifting carrier.

5. The apparatus as claimed in claim 4, wherein a plurality of through-holes are formed in a periphery of the roller body, and
wherein a cleaning liquid supply part is connected to an end of the tube and is configured to supply a cleaning liquid to the tube.

6. The roller cleaning device as claimed in any one of claims 2 to 5, further comprising a sensor configured to detect contact between the cleaning roller and the roller and transmit a signal indicating the contact to the controller.

7. The roller cleaning device as claimed in claim 1, wherein the support structure includes a base supporting side columns fixed onto the base, with the side columns facing each other, and with the side columns rotatably supporting opposite ends of the roll, and
wherein the driving part includes a three-dimensional motion output part provided on the base, the three-dimensional motion part being configured such that its location thereof is adjustable, and the three-dimensional motion part being configured to move the cleaning part in a front-rear direction, a left-right direction, and an up-down direction.

8. The apparatus as claimed in claim 7, wherein the three-dimensional motion output part includes:
a support bed provided on the base;
an X driving part configured to move the support bed in a width direction of the substrate;
a slider provided on the support bed and configured to be slidable in a Y-axis direction perpendicular to the X-axis direction;
a Y driving part configured to move the slider in the Y-axis direction; and
a Z driving part provided on the slider and configured to vertically move the cleaning part in a vertical direction.

9. An apparatus for manufacturing a secondary battery, the apparatus comprising:
a roller configured to contact a substrate coated with a slurry for a secondary battery;
a support structure rotatably supporting the roller; and
the roller cleaning device of any preceding claim.

10. A method of cleaning in an apparatus for manufacturing a secondary battery, the method comprising:
a cleaning roller movement operation of using a driving part of the apparatus to move a cleaning roller toward a roller, with the apparatus including a support structure rotatably supporting the roller in contact with a substrate coated with slurry for a secondary battery, and with the cleaning roller provided with the support structure and being configured to contact the roller to remove contaminants from the roller, and with the driving part operating the cleaning roller; and
a cleaning roll rotation operation of rotating the cleaning roller in contact with the roller to remove contaminants from a surface of the roller.

11. The method as claimed in claim 10, further comprising:
a sensing operation of identifying a close contact state of the cleaning roller and the roll, by using a sensor.
